# FASCICULE DE BREVET EUROPEEN

(11) **EP 1 190 196 B1**
(45) Date de publication et mention de la délivrance du brevet: **19.05.2004**
(21) Numéro de dépôt: 00951627.9
(22) Date de dépôt: 21.06.2000
(51) Int. Cl.: F16L 33/18, F16L 37/133

(54) **DISPOSITIF DE RACCORDEMENT RAPIDE A JOINT PROTEGE, D'UN TUBE A UN ELEMENT RIGIDE**
SCHNELLKUPPLUNGSVORRICHTUNG EINES SCHLAUCHES AN EIN STARRES ELEMENT, MIT GESCHÜTZTER DICHTUNG
DEVICE FOR THE QUICK CONNECTION OF A TUBE TO A RIGID ELEMENT, WITH PROTECTED JOINT

(30) Priorité: 30.06.1999 FR 9908369
(43) Date de publication de la demande: 27.03.2002
(73) Titulaire: LEGRIS S.A., F-35000 Rennes (FR)
(72) Inventeur: PODER, Philippe, F-35580 Guichen (FR)
(74) Mandataire: Robert, Jean-Pierre
(86) Numéro de dépôt international: PCT/FR2000/001709
(87) Numéro de publication internationale: WO 2001/002765

(56) Documents cités:
- EP-A- 0 031 409
- EP-A- 0 549 860
- US-A- 5 413 386

## Description

La présente invention concerne un dispositif de raccordement rapide d'un tube à un élément rigide tel qu'un corps de composant pneumatique ou hydraulique.

On connaît des dispositifs de raccordement comportant un embout tubulaire divisé le long de son axe en une première partie destinée à être raccordée au tube et une seconde partie destinée à être raccordée à l'élément, et des moyens d'accrochage du tube à l'embout d'une part et de l'embout à l'élément d'autre part, la seconde partie de l'embout possédant une gorge de réception d'un joint destiné à assurer l'étanchéité entre cette seconde partie de l'embout et l'élément. Le document US-A-5 413 386 divulgue un tel dispositif.

Lors du stockage, du transport et des diverses manipulations que subit le dispositif de raccordement avant son montage, le joint d'étanchéité, soit n'est pas protégé et risque donc de subir des dégradations, soit est protégé par un bouchon qui occasionne un coût et des manipulations supplémentaires. D'autre part, dans les deux cas, le joint n'est pas protégé au montage et il arrive donc parfois qu'il soit endommagé par son frottement sur une partie saillante de l'élément.

Le but de l'invention est de concevoir un dispositif de raccordement du type précité incorporant des moyens de protection du joint d'étanchéité, efficaces aussi bien avant que lors du montage.

En vue de la réalisation de ce but, on prévoit selon l'invention l'embout est équipé d'une bague de protection du joint qui est montée sur la seconde partie de l'embout pour coulisser suivant l'axe de cet embout entre une position de recouvrement de la gorge dans laquelle elle protège le joint logé dans cette gorge avant et pendant le raccordement de l'embout à l'élément et une position de dégagement décalée par rapport à la gorge vers la première partie de l'embout pour permettre, avant raccordement, la mise en place du joint dans la gorge et, après raccordement, un contact direct du joint avec l'élément.

Ainsi, avant le montage, le joint d'étanchéité est disposé dans la gorge de la seconde partie de l'embout et la bague de protection est placée en position de recouvrement de cette gorge de manière à protéger le joint d'éventuelles agressions extérieures pendant toutes les diverses phases de stockage, de transport et de manipulation de l'embout. Lors du montage le joint est encore protégé par la bague de protection jusqu'à ce que la partie de l'élément qui est destinée à coopérer avec le joint pour assurer l'étanchéité du raccord, pousse automatiquement la bague de protection dans sa position de dégagement pour prendre sa place et venir ainsi en contact direct avec le joint. Le joint est donc constamment protégé.

Selon une première caractéristique avantageuse de l'invention, la bague de protection est axialement immobilisée sur la seconde partie de l'embout dans une position initiale d'attente par un moyen de blocage de faible résistance. On évite ainsi que, lors du transport ou de toute autre manipulation du dispositif de raccordement, la bague de protection ne se déplace de façon intempestive sur la seconde partie de l'embout, et ne risque ainsi de se mettre dans une position indésirable vis-à-vis de l'opérateur et/ou de la machine chargés de mettre en place le joint dans la gorge.

Avantageusement alors, la bague de protection est réalisée en une seule pièce avec la seconde partie de l'embout et le moyen de blocage consiste en une zone de liaison de la bague de protection à la seconde partie de l'embout qui est de faibles caractéristiques mécaniques. On réalise ainsi la fabrication de l'embout et de la bague de protection, ainsi que la mise en place de la bague sur l'embout en une seule opération, ce qui simplifie la fabrication et en réduit le coût.

Selon une autre caractéristique avantageuse de l'invention, la seconde partie de l'embout possède un épaulement qui forme une butée pour la bague de protection dans sa position de dégagement. Le coulissement de la bague de protection en direction de la première partie de l'embout est ainsi limité, ce qui d'une part facilite les opérations de manipulations de cette bague de protection aussi bien lors du montage du joint que lors de l'opération de raccordement, et d'autre part permet de faire jouer à la bague de protection elle-même une fonction de butée pour la partie de l'élément qui vient au contact du joint et qui pousse cette bague dans sa position de dégagement, en butée contre l'épaulement de la seconde partie de l'embout.

D'autres caractéristiques et avantages de l'invention apparaîtront à la lecture de la description qui suit d'un mode de réalisation particulier, donné à titre d'exemple non limitatif.

Il sera fait référence aux dessins en annexe, parmi lesquels :
- la figure 1 est une vue en coupe par un plan axial d'un dispositif de raccordement à joint protégé conforme à l'invention, la bague de protection se trouvant en position d'initiale d'attente et le joint d'étanchéité n'étant pas encore installé dans la gorge de l'embout ;
- la figure 2 est une vue analogue à la figure 1, la bague de protection ayant été déplacée dans sa position de dégagement ;
- la figure 3 est une vue analogue à la figure 2, le joint d'étanchéité ayant été installé dans la gorge de l'embout ;
- la figure 4 est une vue analogue à la figure 3, la bague de protection ayant été déplacée dans sa position de recouvrement de la gorge de l'embout et du joint qu'elle reçoit ;
- la figure 5 est une vue analogue à la figure 4 illustrant le début du raccordement de l'embout à un élément, la bague de protection étant toujours dans sa position de recouvrement pour protéger le joint ;
- la figure 6 est une vue analogue à la figure 5, illustrant la fin du raccordement de l'embout à l'élément, la bague de protection ayant été repoussée dans sa position de dégagement par la partie de l'élément qui vient en contact avec le joint.

En référence aux figures, un dispositif de raccordement rapide à joint protégé conforme à l'invention comporte un embout tubulaire 1 ayant un axe 2 et possédant un canal intérieur cylindrique 1.1. Cet embout est divisé le long de son axe 2 en une première partie 3 destinée à être raccordée à un tube ( non représenté aux figures) et une seconde partie 4 destinée à être raccordée à un élément rigide 100 tel qu'un corps de composant pneumatique ou hydraulique. Dans les représentations proposées aux figures, la première partie 3 est située à gauche et la seconde partie 4 est située à droite.

Dans l'exemple illustré, l'embout 1 est un insert et ses parties 3 et 4 sont donc mâles et destinées à être insérées respectivement dans le tube à raccorder et un alésage correspondant 101 de l'élément 100.

L'alésage 101 de l'élément 100 présente, de gauche à droite, c'est-à-dire de l'extérieur vers l'intérieur, une succession de portions de diamètres décroissants, avec une première portion 102 de grand diamètre, une seconde portion 103 de plus petit diamètre que la portion 102, une troisième portion 104 de plus petit diamètre que la seconde portion 103 et une quatrième portion 105 de plus petit diamètre que la troisième portion 104. Le diamètre de la quatrième portion 105 est voisin de celui du canal intérieur 1.1 de l'embout 1.

Un épaulement 107 est ménagé entre les première et seconde portions 102 et 103 de l'alésage 101.

La première partie 3 de l'embout est pourvue extérieurement, de façon connue en soi, de dents de sapin 3.1 annulaires destinées à "mordre" la surface intérieure du tube pour réaliser un ancrage de ce tube sur la première partie 3 de l'embout 1. Ce raccordement indémontable du tube à la première partie 3 de l'embout 1 assure en lui-même une étanchéité satisfaisante entre l'embout et ce tube.

La seconde partie 4 de l'embout 1 présente une surface extérieure étagée en deux portions, avec une première portion 5 de grand diamètre adjacente à la première partie 3 de l'embout 1 et une seconde portion 6 de plus petit diamètre située à droite de la première portion 5. La première portion et la seconde portion 6 sont destinées à être reçues respectivement dans la seconde portion 103 et la troisième portion 104 de l'alésage 101 de l'élément 100 avec un faible jeu.

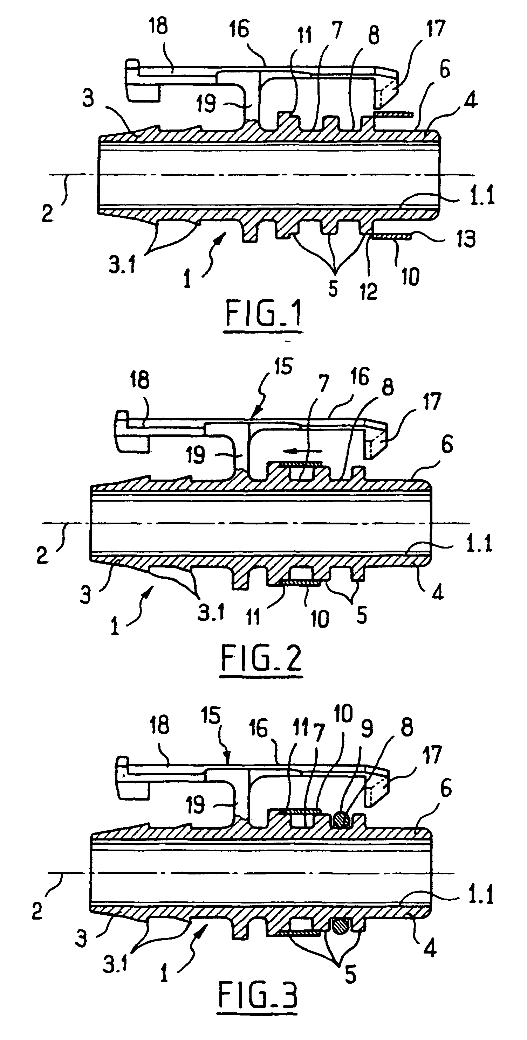

La seconde partie 4 de l'embout 1 présente deux gorges annulaires ménagées en renfoncement de la première portion 5 de sa surface extérieure, l'une située à gauche 7 et l'autre située à droite 8. Comme cela est illustré par les figures 3 à 6, la gorge de droite 8 reçoit un joint torique d'étanchéité 9. Le diamètre de la portion circulaire du joint torique 9 est légèrement supérieur à la profondeur de la gorge 8, de sorte que le joint 9, lorsqu'il est reçu dans la gorge 8, fait radialement saillie de la première portion 5 de la surface extérieure de la seconde partie 4 de l'embout 1.

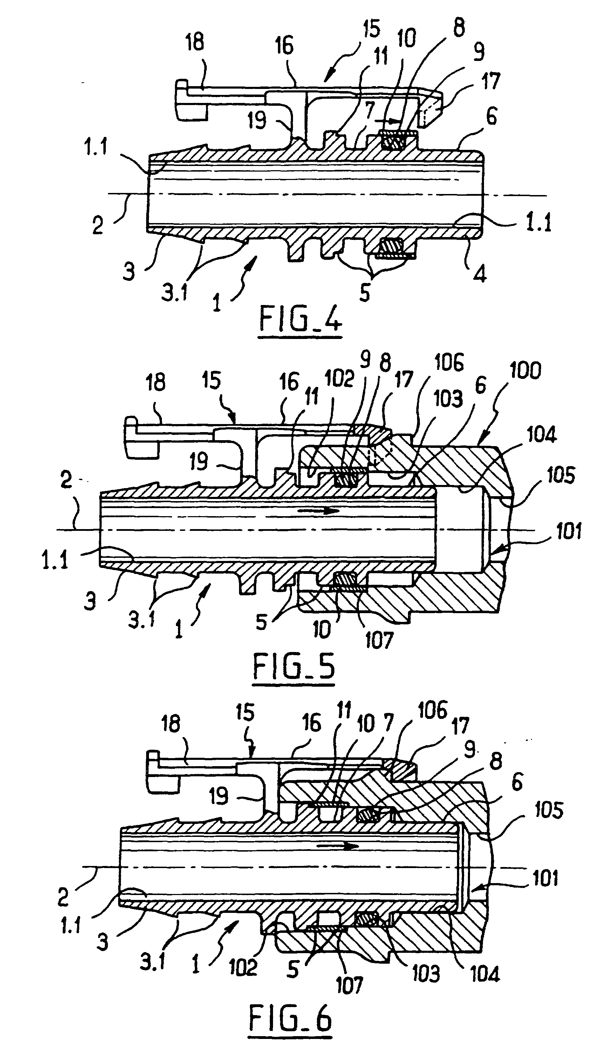

Une bague de protection 10 à section rectangulaire de faible hauteur et possédant un diamètre intérieur voisin du diamètre de la première portion 5 de la seconde partie 4 de l'embout 1 est montée sur cette première portion 5 pour coulisser suivant l'axe 2 entre deux positions : une position de recouvrement de la gorge 8 dans laquelle elle protège le joint 9 comme cela est illustré par les figures 4 et 5, et une position de dégagement décalée par rapport à la gorge 8 vers la gauche, c'est-à-dire vers la première partie 3 de l'embout 1, pour permettre la mise en place du joint 9 dans la gorge 8 et, après raccordement de l'embout à l'élément 100, un contact direct du joint 9 avec l'élément 100 comme cela est illustré aux figures 2,3 et 6. Dans sa position de dégagement, la bague de protection 10 recouvre la gorge de gauche 7.

Pour limiter le coulissement de la bague de protection 10 vers la gauche, c'est-à-dire vers la première partie 3 de l'embout 1, la seconde partie 6 de l'embout 1 possède un épaulement 11 qui borde l'extrémité gauche de la première portion 5 de la surface extérieure de la seconde partie 4 de l'embout 1 pour former une butée contre laquelle le bord gauche de la bague de protection 10 vient en appui lorsque cette bague parvient dans la position de dégagement souhaitée.

Comme cela est visible uniquement à la figure 1, la bague de protection 10 est fabriquée en une seule pièce avec l'embout 1, en une matière plastique ou métallique moulée. Ainsi, en sortie de fabrication, la bague de protection 10 s'étend en porte-à-faux dans le prolongement axial de la première portion 5 de la surface extérieure de la seconde partie 4 de l'embout 1, autour de la seconde portion 6. La bague 10 possède un bord gauche qui est relié à l'extrémité droite de la première portion 5 par une zone de liaison 12 qui est de faible caractéristique mécanique. La bague de protection 10 est ainsi immobilisée axialement sur l'embout 1 dans une position initiale d'attente (situé comme illustré par la figure 1 à droite de la première portion 5 de la seconde partie 6 de l'embout 1). Cette immobilisation temporaire réalisée par la zone de liaison 12 de faible résistance mécanique est assimilable à un blocage de faible résistance qui peut être rompu par un simple effort manuel exercé sur la bague de protection 10 suivant l'axe 2 et vers la gauche, c'est-à-dire en direction de la première partie 3 de l'embout 1.

Bien que le fait de réaliser la bague de protection 10 en une seule pièce avec l'embout 1 constitue un avantage certain quant à la fabrication du dispositif et à la maîtrise des coûts, il n'en reste pas moins possible de réaliser ce blocage de faible résistance de la bague de protection 10 en position initiale d'attente par tout autre moyen, comme par exemple un filet ou des points de colle ou de soudure ou même un simple serrage local.

Par ailleurs, la bague de protection 10 présente un chanfrein intérieur 13 adjacent à son bord droit. Ce chanfrein intérieur 13 a pour fonction d'éviter tout marquage du joint 9 lorsque la bague de protection 10 coulisse de sa position de recouvrement vers sa position de dégagement, ou inversement, alors que le joint 9 est en place dans la gorge 8, comme cela sera mieux expliqué ultérieurement.

L'épaisseur du bord droit de la bague 10 est égale à la hauteur de l'épaulement 107 ménagé entre les première et seconde portions 102 et 103 de l'alésage 101 de l'élément 100.

L'embout 1 est par ailleurs pourvu d'un organe 15 de son accrochage à l'élément 100. Cet organe 15, qui est réalisé en une seule pièce moulée avec l'embout 1, comporte une lame 16 qui s'étend parallèlement à l'axe 2, à l'extérieur de l'embout 1, et qui est raccordée à l'embout 1, entre ses deux parties 3 et 4, par une patte 19. L'organe 15 forme ainsi un T dont le pied est constitué par la patte 19 et dont la barre supérieure est constituée par la lame 16. A droite de la patte 19, la lame 16 s'étend en regard de la première portion 5 de la surface extérieure de la seconde partie 4 de l'embout 1 et présente à son extrémité libre une dent d'accrochage 17 destinée à coopérer avec une saillie extérieure correspondante 106 de l'élément 100. A gauche de la patte 19, la lame 16 s'étend en regard de la première partie 3 de l'embout 1 pour former un levier de manoeuvre 18 qui, lorsqu'il est pressé en direction de l'embout 1, provoque le basculement de la lame 16 de telle sorte que la dent 17 s'écarte de l'embout 1 pour se désengager de la saillie 106 de l'élément 100 et libérer ainsi l'embout 1.

Avec le dispositif qui vient d'être décrit, le raccordement rapide d'un tube (non représenté) à l'élément 100 se déroule de la manière suivante.

L'embout 1 se présente initialement dans la configuration illustrée par la figure 1. La bague de protection 10 se trouve dans sa position initiale d'attente, immobilisée dans cette position par sa zone de liaison 12 de faibles caractéristiques mécaniques avec l'embout.

Avant que le joint 9 ne soit mis en place dans la gorge 8, la bague de protection 10 est poussée vers la gauche avec un effort suffisant pour faire céder la zone de liaison 12. La bague 10 glisse alors sur la première portion 5 de la seconde partie 4 de l'embout 1 pour venir dans sa position de dégagement, en butée contre l'épaulement 11, comme cela est illustré par la figure 2. Il est préférable si l'on souhaite obtenir une bonne étanchéité, que le joint 9 ne soit pas mis en place dans la gorge 8 avant que la bague de protection 10 ne soit placée dans sa position de dégagement car, dans le cas contraire, le coin intérieur du bord gauche de la bague 10, qui vient d'être rompu de sa liaison avec l'embout 1 et qui présente de ce fait des irrégularités, risquerait d'endommager le joint 9 par son frottement contre ce dernier.

La bague de protection 10 étant donc bien placée dans sa position de dégagement, le joint 9 est mis en place dans la gorge 8, comme illustré par la figure 3.

La bague de protection 10 est alors placée, en la faisant coulisser sur l'embout 1 vers la droite, dans sa position de recouvrement de la gorge 8 et donc du joint 9 qu'elle reçoit, comme illustré par la figure 4. On notera que, lors de ce coulissement de la bague de protection 10 de sa position de dégagement à sa position de recouvrement, le joint 9 est préservé de tout frottement agressif, notamment vis-à-vis du bord droit de la bague de protection 10 dont le chanfrein intérieur 13 forme une rampe de compression progressive du joint 9 et ne présente aucune zone anguleuse aiguë qui risquerait de marquer ce joint.

Dans la configuration de la figure 4, l'embout équipé du joint 9 peut être stocké, transporté ou même manipulé sans que le joint 9 ne risque d'être endommagé puisque ce dernier est entièrement protégé par la bague 10 qui le masque.

Le raccordement, à partir de cette dernière configuration illustrée par la figure 4, de la seconde partie 4 de l'embout 1 à l'élément 100 se déroule de la manière suivante illustrée par les figures 5 et 6.

Dans la configuration de la figure 4, la seconde partie 4 de l'embout 1 est insérée suivant l'axe 2 dans l'alésage 101 de l'élément 100.

Lorsque le bord droit de la bague de protection 10 parvient en butée contre l'épaulement 107 ménagé entre les première et seconde portions 102 et 103 de l'alésage 101 de l'élément 100, comme illustré par la figure 5, l'effort d'enfoncement exercé sur l'embout 1 suivant l'axe 2 en direction de la droite force la bague de protection 10 à coulisser sur la première portion 5 de la surface extérieure de la seconde partie 6 de l'embout 1 vers la gauche, c'est-à-dire vers sa position de dégagement, dégageant ainsi progressivement le joint 9 logé dans la gorge 8. Ici encore, la présence du chanfrein intérieur 13 au bord droit de la bague de protection 10 permet d'éviter tout marquage préjudiciable du joint 9 lors du glissement de la bague 10, et en particulier de son bord droit, sur ce joint. De plus, comme la hauteur de l'épaulement 107 de l'alésage 101 est égale à l'épaisseur du bord droit de la bague de protection 10, la surface intérieure de cette bague 10 est en continuité avec la surface de la portion 103 de l'alésage 101, de sorte que, lors du passage du joint 9 entre la bague 10 et la portion 103 de l'alésage 101, aucune aspérité ni aucun renfoncement ne risque d'endommager par frottement le joint 9. En outre, le joint 9, déjà comprimé par la bague 10, ne fait que conserver cet état de compression lorsque la portion 103 de l'alésage 101 de l'élément 100 vient remplacer la bague 10 au contact du joint 9, de sorte qu'aucun effort d'insertion de l'embout 1 dans l'élément 100 n'est nécessaire pour comprimer le joint 9.

L'enfoncement de la seconde partie 4 de l'embout 1 dans l'alésage 101 de l'élément 100 se poursuit jusqu'à ce que la bague de protection 10 vienne en butée contre l'épaulement 11 de l'embout 1, dans sa position de dégagement.

Dans cette configuration finale illustrée par la figure 6, la seconde portion 103 de l'alésage 101 de l'élément 100 s'est substituée à la bague de protection 10 pour recouvrir la gorge 8 de l'embout 1 et être en contact direct avec le joint 9. Ainsi, dans cette configuration, la bague de protection 10 est reçue dans la première portion 102 de l'alésage 101 de l'élément 100, tandis que les première et seconde portions 5 et 6 de la seconde partie de l'embout 1 sont respectivement reçues avec un faible jeu dans les seconde et troisième portions 103 et 104 de l'alésage 101. Le conduit intérieur 1.1 de l'embout 1 s'étend quant à lui dans le prolongement de la quatrième portion 105 de l'alésage 101.

D'autre part, dans la configuration finale illustrée par la figure 6, la dent 17 de l'organe d'accrochage 15 vient en prise avec la saillie extérieure 106 de l'élément 100 pour retenir l'embout 1 dans cette position finale d'insertion de sa seconde partie 4 dans l'alésage 101 en s'opposant à tout effort d'arrachement de l'embout 1 (résultant d'un effort mécanique de traction ou d'une mise sous pression hydraulique ou pneumatique du raccord ainsi formé).

Enfin, pour achever le raccordement, le tube (non représenté aux figures) est emmanché par son extrémité sur la première partie 3 de l'embout 1 sur laquelle il est automatiquement ancré par les dents 3.1 qui "mordent" sa surface intérieure pour s'opposer à tout effort d'arrachement axial.

L'invention n'est pas limitée au mode de réalisation qui vient d'être décrit, mais englobe au contraire toute variante comprise par l'objet des revendications.

En particulier, les dispositions de l'invention qui ont été décrites en regard d'un embout mâle de raccordement peuvent être mises en oeuvre avec un embout femelle de raccordement le joint étant logé dans une gorge ménagée dans la surface cylindrique de l'alésage de cet embout femelle et la bague de protection pouvant glisser sur cette surface.

Par ailleurs, bien que dans l'exemple décrit en référence aux dessins annexés, la bague de protection soit venue de matière avec le reste de l'embout, il serait également possible de réaliser un dispositif dans lequel la bague serait séparée de l'embout et simplement rapportée à coulissement sur ce dernier. En outre, que la bague soit venue de matière avec l'embout ou soit séparée de celui-ci, il n'est pas indispensable de là placer en position de dégagement avant de mettre en place le joint. Cela est certes préférable, comme indiqué précédemment, dans le cas où la bague présente un bord intérieur gauche (par référence au sens des dessins annexés) pourvu d'aspérités qui risqueraient d'endommager le joint lors de son passage sur celui-ci. Mais cela peut s'avérer superflu lorsque le bord intérieur gauche de la bague de protection est dépourvu d'aspérité ou pour certaines applications dans lesquelles un niveau d'étanchéité moindre est requis.

## Revendications

1. Dispositif de raccordement rapide d'un tube à un élément rigide (100), comportant un embout tubulaire (1) divisé le long de son axe (2) en une première partie (3) destinée à être raccordée au tube et une seconde partie (4) destinée à être raccordée à l'élément (100), et des moyens d'accrochage (3.1,15) du tube à l'embout (1) d'une part et de l'embout (1) à l'élément (100) d'autre part, la seconde partie (4) de l'embout (1) possédant une gorge (8) de réception d'un joint (9) destiné à assurer l'étanchéité entre cette seconde partie (4) de l'embout et l'élément (100), **caractérisé en ce que** l'embout (1) est équipé d'une bague de protection (10) du joint (9) qui est montée sur la seconde partie (4) de l'embout pour coulisser suivant l'axe (2) de cet embout entre une position de recouvrement de la gorge (8) dans laquelle elle protège le joint (9) logé dans cette gorge avant et pendant le raccordement de l'embout (1) à l'élément (100) et une position de dégagement décalée par rapport à la gorge (8) vers la première partie (3) de l'embout (1) pour permettre, avant raccordement, la mise en place du joint (9) dans la gorge (8) et, après raccordement, un contact direct du joint (9) avec l'élément (100).

2. Dispositif de raccordement selon la revendication 1, **caractérisé en ce que** la bague de protection (10) est axialement immobilisée sur la seconde partie (4) de l'embout (1) dans une position initiale d'attente par un moyen de blocage (12) de faible résistance.

3. Dispositif de raccordement selon la revendication 2, **caractérisé en ce que** la bague de protection (10) est réalisée en une seule pièce avec la seconde partie (4) de l'embout (1) et **en ce que** le moyen de blocage consiste en une zone de liaison (12) de la bague de protection (10) à la seconde partie (4) de l'embout (1) qui est de faibles caractéristiques de résistance mécanique.

4. Dispositif de raccordement selon l'une des revendications précédentes, **caractérisé en ce que** la seconde partie (4) de l'embout (1) possède un épaulement (11) qui forme une butée pour la bague de protection (10) dans sa position de dégagement.

## Claims

1. A device for quickly coupling a tube to a rigid element (100), the device comprising a tubular endpiece (1) subdivided along its axis (2) into a first portion (3) for connection to the tube and a second portion (4) for coupling to the element (100), and fastener means (3.1, 15) for fastening the tube to the endpiece (1) and for fastening the endpiece (1) to the element (100), the second portion (4) of the endpiece (1) possessing a groove (8) for receiving a gasket (9) that is to provide sealing between said second portion (4) of the endpiece and the element (100), the device being **characterized in that** the endpiece (1) is fitted with a protective sleeve (10) for protecting the gasket (9), which sleeve is mounted on the second portion (4) of the endpiece to slide along the axis (2) of the endpiece between a position where it covers the groove (8), in which position it protects the gasket (9) housed in said groove before and during coupling of the endpiece (1) to the element (100), and a disengaged position which is offset from the groove (8) towards the first portion (3) of the endpiece (1) so as to make it possible, prior to coupling, for the gasket (9) to be put into place in the groove (8), and after coupling for the gasket (9) to come directly into contact with the element (100).

2. A coupling device according to claim 1, **characterized in that** the protective sleeve (10) is prevented from moving axially over the second portion (4) of the endpiece (1) while it is in an initial, waiting position by weak locking means (12).

3. A coupling device according to claim 2, **characterized in that** the protective sleeve (10) is made integrally with the second portion (4) of the endpiece (1) and **in that** the locking means consists in a zone (12) linking the protective sleeve (10) to the second portion (4) of the endpiece (1), which zone is of weak mechanical strength.

4. A coupling device according to any preceding claim, **characterized in that** the second portion (4) of the endpiece (1) possesses a shoulder (11) which forms an abutment for the protective sleeve (10) in its disengaged position.

## Patentansprüche

1. Schnellverbinder zum Verbinden eines Rohres mit einem starren Element (100), umfassend einen rohrförmigen Ansatz (1), der entlang seiner Achse (2) in einen ersten Abschnitt (3), der dazu vorgesehen ist, mit dem Rohr verbunden zu werden, und einen zweiten Abschnitt (4) geteilt ist, der dazu vorgesehen ist, mit dem Element (100) verbunden zu werden, und Mittel (3.1, 15) zum Befestigen des Rohres an dem Ansatz (1) sowie zum Befestigen des Ansatzes (1) an dem Element (100), wobei der zweite Abschnitt (4) des Ansatzes (1) eine Nut (8) zur Aufnahme einer Dichtung (9) hat, die dazu vorgesehen ist, die Dichtigkeit zwischen dem zweiten Abschnitt (4) des Ansatzes und dem Element (100) sicherzustellen, **dadurch gekennzeichnet, dass** der Ansatz (1) mit einem Ring (10) zum Schutz der Dichtung (9) ausgestattet ist, der an dem zweiten Abschnitt (4) des Ansatzes derart angeordnet ist, dass er entlang der Achse (2) des Ansatzes zwischen einer Position, in der er die Nut (8) bedeckt und die in der Nut angeordnete Dichtung (9) vor und während dem Verbinden des Ansatzes (1) mit dem Element (100) schützt, und einer gelösten Position verschiebbar ist, in der er gegenüber der Nut (8) in Richtung des ersten Abschnitts (3) des Ansatzes (1) versetzt ist, um das Anordnen der Dichtung (9) in der Nut (8) vor Herstellen der Verbindung und einen direkten Kontakt zwischen der Verbindung (9) und dem Element (100) zu ermöglichen.

2. Verbindungsvorrichtung nach Anspruch 1, **dadurch gekennzeichnet, dass** der Schutzring (10) durch ein Blockiermittel (12) geringer Festigkeit in Achsenrichtung unbeweglich auf dem zweiten Abschnitt (4) des Ansatzes in einer Ausgangswarteposition angeordnet ist.

3. Verbindungsvorrichtung nach Anspruch 2, **dadurch gekennzeichnet, dass** der Schutzring (10) einstückig mit dem zweiten Abschnitt (4) des Ansatzes (1) ausgebildet ist, und dass das Blockiermittel aus einem Verbindungsbereich (12) zum Verbinden des Schutzrings (10) mit dem zweiten Abschnitt (4) des Ansatzes (1) besteht, der eine geringe mechanische Festigkeit hat.

4. Verbindungsvorrichtung nach einem der vorhergehenden Ansprüche, **dadurch gekennzeichnet, dass** der zweite Abschnitt (4) des Ansatzes (1) eine Schulter (11) hat, die gegenüber dem Schutzring (10) in seiner gelösten Position einen Anschlag bildet.
